(19) **Europäisches Patentamt / European Patent Office / Office européen des brevets**

(11) **EP 1 465 782 B1**

(12) **FASCICULE DE BREVET EUROPEEN**

(45) Date de publication et mention
de la délivrance du brevet:
**07.11.2007 Bulletin 2007/45**

(21) Numéro de dépôt: **02804944.3**

(22) Date de dépôt: **18.12.2002**

(51) Int Cl.:
***B60C 23/04*** *(2006.01)*

(86) Numéro de dépôt international:
**PCT/FR2002/004435**

(87) Numéro de publication internationale:
**WO 2003/051652 (26.06.2003 Gazette 2003/26)**

(54) **SYSTEME DE CONTROLE DE LA PRESSION DES PNEUMATIQUES DES ROUES D'UN VEHICULE**

SYSTEM ZUR STEUERUNG DES REIFENDRUCKS EINES FAHRZEUGRADS

SYSTEM FOR CONTROLLING A VEHICLE WHEEL TYRE PRESSURE

(84) Etats contractants désignés:
**DE ES FR GB IT**

(30) Priorité: **18.12.2001 FR 0116368**

(43) Date de publication de la demande:
**13.10.2004 Bulletin 2004/42**

(73) Titulaire: **JOHNSON CONTROLS AUTOMOTIVE ELECTRONICS**
**95523 Cergy Pontoise (FR)**

(72) Inventeurs:
• **HERNANDO, Serge**
**F-95800 Cergy (FR)**

• **PINARD, Thierry**
**F-92380 Garches (FR)**
• **DELAPORTE, Francis**
**F-95520 Osny (FR)**

(74) Mandataire: **Bloch, Gérard et al**
**Cabinet Bloch & Gevers**
**23bis, rue de Turin**
**75008 Paris (FR)**

(56) Documents cités:
**EP-A- 0 997 326      EP-A- 1 052 119**

## Description

La présente invention concerne les systèmes de contrôle de la pression des pneumatiques des roues des véhicules automobiles (TPMS, Tire Pressure Monitoring System) avec, sur chaque roue, un capteur de pression et un émetteur pour transmettre la pression à un organe de contrôle.

Dans ces systèmes, les signaux d'émission comportent des données d'identification des capteurs et, si on ne changeait jamais les roues d'un véhicule, un simple apprentissage initial, en usine, de l'appariement des signaux et des roues, permettrait de déterminer la localisation, relativement au châssis du véhicule, des capteurs et donc des pneumatiques défectueux. Or, les roues d'un véhicule peuvent être de temps à autre changées et interverties, ne serait-ce, par exemple, que lorsqu'on monte des pneumatiques « neige ».

La demanderesse a donc cherché à résoudre le problème de la discrimination des capteurs de pression des pneumatiques des roues de véhicule automobile.

On connaît déjà des solutions à ce problème.

Ainsi, EP-A-806 307 enseigne d'associer au signal d'un capteur de pression d'une roue des données sur la vitesse de rotation de la roue déterminée doublement, d'une part, à partir de la roue elle-même et, d'autre part, à partir du châssis du véhicule, assurant la référence de positionnement.

Pareille solution n'est pas satisfaisante, car elle est d'une mise en oeuvre très lourde, avec une multiplicité de dispositifs de détermination de la vitesse de rotation des roues et de dispositifs de réception des signaux des capteurs de pression.

EP-A-0 997 326 enseigne un système de contrôle de la pression des pneumatiques des roues d'un véhicule automobile selon le préambule de la revendication 1.

La présente demande vise à proposer une solution plus légère et moins onéreuse.

A cet effet, l'invention propose un système de contrôle de la pression des pneumatiques des roues d'un véhicule automobile selon la revendication 1.

Pour diverses raisons, les roues d'un véhicule tournent à des vitesses de rotation sensiblement différentes. On peut citer par exemple des différences de vitesses de rotation dues à des différences de pression des pneus, des différences d'usure des bandes de roulement de ces mêmes pneus, la dynamique du véhicule, la répartition de la charge, la température.

L'invention est remarquable par le fait qu'elle n'exige aucune multiplicité de capteurs.

Dans une forme de réalisation intéressante du système de l'invention, lesdits moyens de détermination utilisent des capteurs fixes de vitesse de rotation de roue dont on connaît la localisation, de préférence des capteurs du système antiblocage de roues (ABS, anti-blocking system).

L'invention est alors intéressante par l'emploi de capteurs de vitesse existants, qui est une solution à bas coût. De surcroît, le mode opératoire des moyens de comparaison assure une excellente fiabilité des résultats de localisation, compte-tenu de la qualité des capteurs d'antiblocage.

La demanderesse ayant réalisé que l'enveloppe de modulation du signal délivré par un capteur de pression de pneumatique était un signal périodique de période égale à la durée des tours de roue, les moyens de détermination des vitesses de rotation comprennent de préférence des moyens pour déterminer les périodes des enveloppes de modulation des signaux émis par les émetteurs couplés aux capteurs de pression et en déduire de cette manière les vitesses de rotation des roues, ce qui permet des comparaisons avec les vitesses fournies par les capteurs fixes localisés, pour localiser les capteurs de pression.

Dans une autre forme de réalisation du système de l'invention, lesdits moyens de comparaison sont agencés pour ne procéder aux comparaisons que pendant des phases de trajectoires non rectilignes du véhicule.

Dans un virage, les deux roues d'un même train, avant ou arrière, ne tournent pas à la même vitesse, tout comme les deux roues d'un même côté, droit ou gauche. Dans un virage, les vitesses fournies par les capteurs fixes ABS sont déjà plus distinctes les unes des autres, ce qui est avantageux. De surcroît, à l'aide de la vitesse du véhicule et des caractéristiques dynamiques de la trajectoire du véhicule, notamment le sens du virage ou l'angle de braquage des roues, on peut calculer les vitesses des roues et utiliser les vitesses calculées comme termes de la comparaison des vitesses et donc localiser les capteurs et, par conséquent, contrôler la pression des différents pneumatiques ainsi localisés.

La vitesse de rotation v en tours par seconde d'une roue sur la jante de laquelle l'émetteur du capteur émet un signal de période T, est donnée par la relation :

$$v = 1/T \qquad (1)$$

Corrélativement, la vitesse linéaire V d'un pneumatique en contact sur le sol, si on désigne par c la circonférence de ce pneumatique, est :

$$V = c/T \qquad (2)$$

Ainsi l'invention est d'autant plus remarquable que les moyens de détermination peuvent ne comprendre aucun capteur de vitesse de rotation de roue.

L'invention sera mieux comprise à l'aide de la description suivante de plusieurs formes de réalisation du système de mesure de l'invention, en référence aux dessins annexés dont :

- la figure 1 représente le schéma par blocs du système de l'invention ;
- la figure 2 représente un signal type délivré par un capteur de pression du système et son enveloppe de modulation ;
- la figure 3 représente l'organigramme du procédé de détermination de la localisation des capteurs de pression des roues du système ;

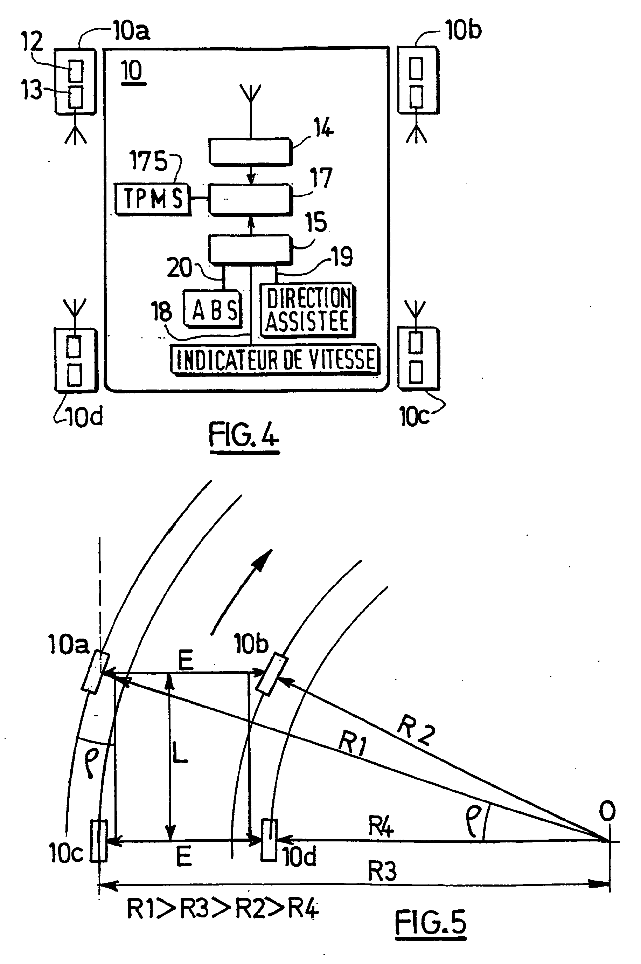

- la figures 4 illustre l'implantation du système sur un véhicule à quatre roues et
- la figure 5 illustre le comportement dynamique des roues de véhicule dans un virage.

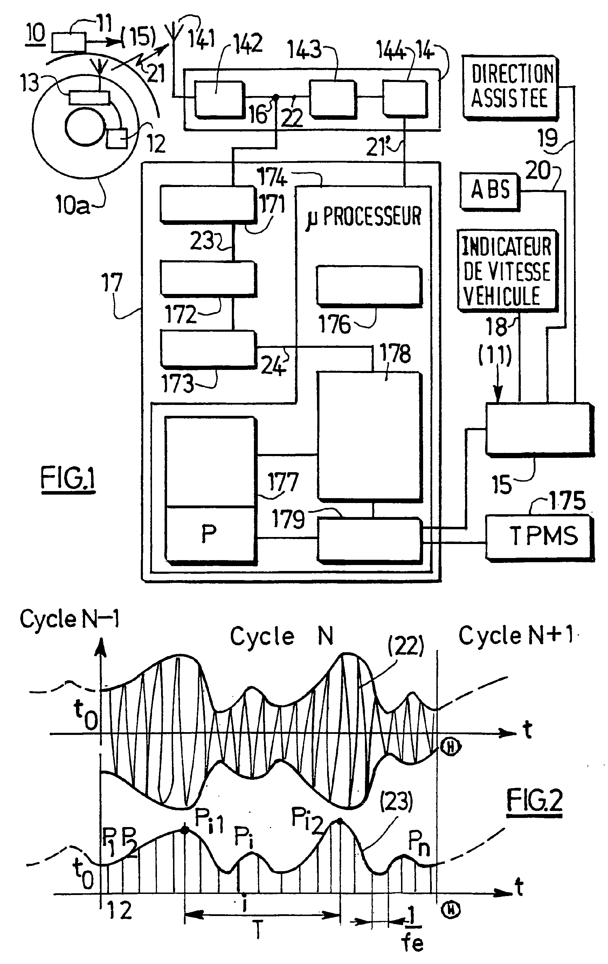

En référence à la figure 1, il est prévu dans le système qui va maintenant être décrit, et pour chaque roue de véhicule, un ensemble comportant un capteur de pression 12 couplé à un émetteur 13 montés sur la roue 10a et un récepteur fixe 14 destiné à traiter le signal 21 émis par l'émetteur 13.

Le récepteur fixe 14 comprend, en série, une antenne réceptrice 141, un démodulateur 142, fournissant un signal analogique 22 débarrassé de sa porteuse, un filtre 143 et une électronique 144 de traitement des données de pression des pneumatiques délivrant des données 21' à un organe de contrôle 17.

Le récepteur fixe 14 permet de transformer le signal radio 21 en données numériques 21' comportant la pression du pneumatique et son identification.

Une dérivation 16, ici en sortie du démodulateur 142, alimente l'organe de contrôle 17.

L' organe de contrôle 17 comprend, en série, un circuit de filtrage 171, ici un filtre RC, fournissant un signal filtré 23, un échantillonneur-bloqueur 172 et un convertisseur analogique-numérique 173 et un microprocesseur 174. Le microprocesseur 174 comporte des mémoires de programmes 178, 179, une mémoire de données 177 et une horloge 176.

L'organe de contrôle 17 délivre en sortie les données de pression, d'identification et de localisation à un composant TPMS 175 de gestion de ces données.

Par ailleurs, l'organe 17 reçoit en entrée des données de vitesse 18 du véhicule par l'intermédiaire d'un circuit 15 de lissage de données.

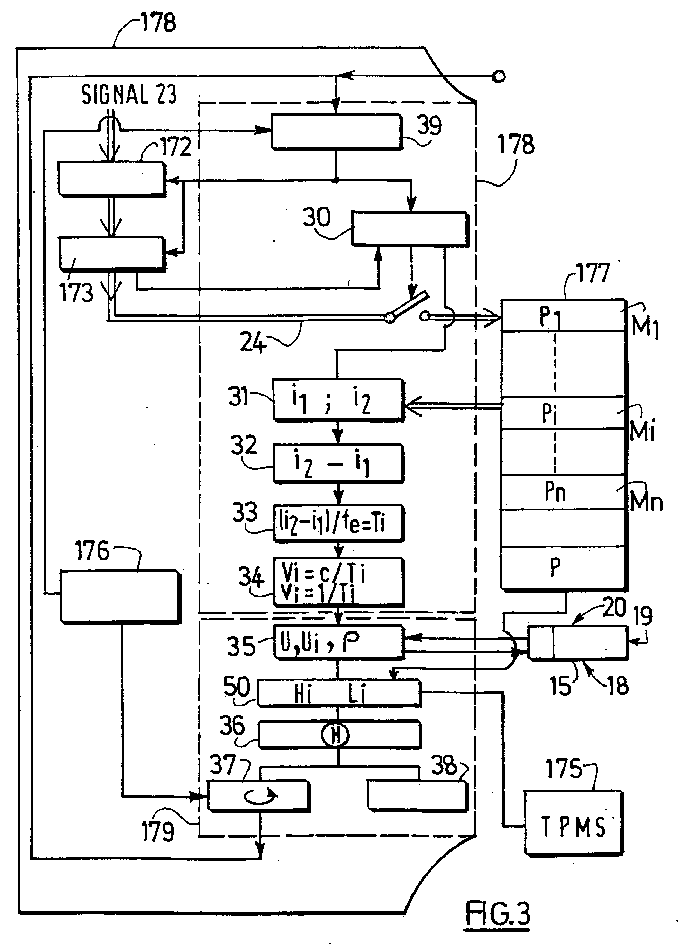

Le programme de la mémoire 178 comprend au moins une étape 34 (figure 3) de calcul des vitesses de rotation des roues du véhicule. Le programme de la mémoire 179 comprend au moins une étape 50 (figure 3) de comparaison des vitesses de rotation de roue.

L'organe de contrôle 17 reçoit en outre des données 20 des vitesses de rotation des roues, et leur localisation, issues des capteurs ABS, toujours par l'intermédiaire du circuit de lissage 15.

Ici, l'organe de contrôle 17 reçoit en outre des données 19 sur la position du volant, d'indication de virage à gauche ou à droite, ou d'angle de braquage des roues.

Le fonctionnement du système de l'invention va maintenant être exposé.

Le signal 21 délivré par le capteur 12 et émis par son émetteur 13 subit une modulation parasite due notamment à la carrosserie 10 du véhicule avant d'être reçu par le récepteur 14 et d'y être traité pour fournir la pression du pneumatique.

Grâce à la dérivation 16, le signal 22 est aussi filtré par le filtre 171 de l'organe de contrôle 17, de fréquence de coupure $F_c$ légèrement supérieure à la fréquence de rotation maximale des roues.

En sortie du filtre 171, le signal 23 est échantillonné et numérisé à une fréquence fe d'échantillonnage par l'échantillonneur - bloqueur 172 qui gèle les grandeurs analogiques à des instants réguliers et le convertisseur analogique-numérique 173 qui fournit, en sortie 24, des échantillons numériques Pi du signal dont on veut déterminer la période (figure 2). Selon le théorème de Shannon, la fréquence fe est au moins le double de la fréquence de coupure $F_e$. Ces opérations sont effectuées grâce notamment à l'horloge 176, sous le contrôle du processeur 174.

En référence à la figure 3, le microprocesseur 174 transmet le contrôle au programme de la mémoire 178, lequel acquiert et range (30) n échantillons Pi en mémoire 177, depuis $P_1$ jusqu'à $P_n$ respectivement de la zone mémoire $M_1$ à la zone mémoire $M_n$. La valeur de n sera abordée par la suite.

Ensuite, le programme de la mémoire 178 calcule la vitesse de rotation de la roue qu'il transmet au système TPMS 175. Pour cela, à cette étape, il effectue successivement, pour la roue i, les opérations suivantes:

- recherche (31) des adresses i1 et i2 de rangement des deux plus grandes valeurs Pi dans la mémoire 177,
- calcul (32, 33) de la durée qui sépare ces deux rangs, c'est-à-dire de la période de l'enveloppe de modulation Ti = (i2 - i1) / fe,
- calcul (34) des vitesses de rotation Vi = ci/ T i ou angulaire vi = 1 / Ti

Une fonction (39) coordonne les acquisitions 172, 173 et le programme de la mémoire 178 grâce à l'horloge 176.

Les opérations effectuées par le programme de la mémoire 178 vont maintenant être détaillées.

On mémorise les données Pi en mémoire 177 pendant une durée d'observation Θ. La durée d'observation Θ est déterminée à partir d'une information sur la vitesse du véhicule disponible par ailleurs, par exemple celle que fournissent les instruments de bord : compteur de vitesse, odomètre.

En effet, si U est cette vitesse, en mètres par seconde, et c, la longueur, en mètres, de la circonférence de la roue, une estimation de la période T de rotation des roues est donnée par le rapport c / U. Cette estimation permet de choisir la durée d'observation Θ pour déterminer la période T des enveloppes :

$$\Theta = \frac{2c}{U} \qquad (3)$$

La durée d'observation $\Theta$ peut, à partir d'un certain nombre de cycles de calcul, être optimisée à une valeur plus faible, compte tenu de l'historique du signal, de la connaissance de la vitesse du véhicule et de la position du maximum dans la période, jusqu'à une valeur proche de T mais toujours supérieure de façon à ce que le signal périodique dont on cherche à déterminer la période s'y trouve en entier.

Pour déterminer la période T concernant le signal d'une roue, en référence à la figure 2, on range, à partir d'un temps to et pendant la durée d'observation $\Theta$ ainsi déterminée, les n valeurs échantillonnées obtenues $P_1$, $P_2$, ..., $P_i$, ... , $P_n$ dans un ordre par exemple chronologique 1, 2, ... , i, ...n. Naturellement, le nombre n des valeurs rangées est tel que

$$n = fe.\Theta . \qquad (4)$$

On recherche alors dans le signal deux maxima successifs $P_{i1}$ et $P_{i2}$ sensiblement égaux, dont les valeurs correspondent aux maxima de l'une et de l'autre de deux périodes successives, et on relève leurs emplacements de rangement i1 et i2 dans cette durée d'enregistrement $\Theta$.

On en déduit la période cherchée :

$$T = (i2 - i1) / fe \qquad (5)$$

Et on obtient enfin la vitesse de rotation de la roue entre l'instant to et l'instant to + $\Theta$ selon l'une des formules (1) ou (2) ci-dessus.

Il suffit de répéter le cycle qui vient d'être décrit pour obtenir les vitesses de rotation suivantes. On dispose alors d'un échantillonnage de la vitesse de rotation instantanée de la roue avec une certaine fréquence d'échantillonnage Fe.

Puisqu'un cycle contient au moins une durée d'observation auquel il faut, en théorie, ajouter une durée de traitement, la durée du cycle devrait être d'une durée plus longue et, en principe, fixe.

On dispose ainsi d'une mesure de vitesse de rotation des roues de façon continue à une fréquence

$$Fe = 1 / \Theta \qquad (6)$$

Cette fréquence est variable et dépend de la vitesse du véhicule. Plus cette vitesse sera élevée, plus cette fréquence le sera. Ainsi, on dispose d'une vitesse de rotation de roue Vi d'autant plus rapidement que la vitesse du véhicule est élevée.

Naturellement, il peut y avoir autant de mémoires 177 et de sessions de programme dans la mémoire 178 activées au cours d'un cycle que de roues.

Enfin, le module programme de la mémoire 179 réalise les comparaisons des vitesses de rotation des roues pour en déduire les localisations des capteurs de pression des roues.

Ce module programme réalise les opérations suivantes :

- acquisition (35) des vitesses ABS, Uj, fournies par les moyens 15, et envoi vers les moyens de lissage 15 des caractéristiques d'échantillonnage des vitesses Vi,
- calcul de la localisation Hi (50) et vérification des conditions de validité,
- mise à disposition de ces vitesses au système TPMS 175, ou indication de conditions de validité non remplies,
- calcul (36) d'une nouvelle durée d'observation

$$\Theta i = \frac{2c}{U} \qquad (7)$$

et d'un nouveau nombre d'échantillons à acquérir n, en rapport avec la vitesse du véhicule, c étant la moyenne des valeurs ci, et $\Theta$, la plus grande des valeurs $\Theta i$,
- initialisation (38) du cycle suivant, consistant à mettre à jour la durée $\Theta$ et le nombre n calculés précédemment et à effacer la mémoire 177,
- attente (37), s'il y a lieu, de l'instant de début de cycle suivant to + (N+1).$\Theta$,
- lancement du cycle suivant (39) pour contrôle de l'échantillonneur - bloqueur 172 et du convertisseur 173 et lancement du programme de la mémoire 178.

Ces opérations vont maintenant être détaillées :

On compare donc les vitesse Vi aux vitesses de rotation des roues Uj fournies par les capteurs de vitesses, dont on connaît la localisation Lj, du dispositif 20 d'antiblocage des roues.

Les comparaisons des vitesses Vi des roues i et Uj des capteurs j du système ABS s'effectuent de la manière suivante :

On classe, par exemple dans le sens croissant, et en permanence, d'une part les vitesses Vi des roues i, et d'autre part les vitesses Uj des capteurs j, et on forme les couples Cij de vitesses (Vi, Uj), les indices i et j étant tels que dans le classement des vitesses V, Vi a le même rang que Uj dans le classement des vitesses U.

On associe alors le capteur de pression de la roue i, d'identification Idi, correspondant à la vitesse de rotation Vi et la localisation Lj du capteur j de vitesse ABS qui a donné la vitesse Uj, aux conditions suivantes :

1°) l'écart des vitesses Uj et Vi est inférieur à un seuil prédéterminé,

2°) l'écart entre la moyenne des vitesses (Vi + Uj) / 2 et les autres vitesses des trois autres roues est supérieur à un autre seuil prédéterminé.

Naturellement, ces conditions sont loin d'être toujours respectées. Il est nécessaire que les vitesses de rotation des quatre roues diffèrent suffisamment des autres, ce qui ne peut être le cas que lors de virages amorcés par le véhicule ou après un filtrage suffisamment long, qui peut être considérablement raccourci si on y exclue les données de vitesse acquises pendant les virages. Les filtrages opérés sur les différences entre les vitesses Ui et Vj peuvent alors être très classiques et être du type connu sous le nom de filtrage du signal noyé dans du bruit.

La figure 5 montre comment ces vitesses peuvent être différentes lors de virages, en l'occurrence un virage à droite, mais les résultats seraient strictement inverses pour un virage à gauche.

Le véhicule dont quatre roues sont référencées respectivement par 10a, 10b, 10c, 10d amorce un virage à droite par le fait qu'on imprime aux roues 10a et 10b du train avant un angle de braquage ρ. Supposons, pour plus de simplicité, cet angle figé. Le véhicule va parcourir un cercle ainsi que chacune de ses roues.

Les roues 10a, 10b, 10c, 10d vont ainsi parcourir des cercles de rayons respectifs R1, R2, R3, R4, qu'on peut en première approximation évaluer en fonction de l'empattement E et de la longueur L du véhicule, de la manière suivante :

- R1= L/sin ρ
- R2 = R1 - E.cos ρ
- R3 = R1.cos ρ
- R4 = R3 - E

Les vitesses de rotation des roues, si un cercle complet est parcouru dans le temps dt, sont égales à :

$$Vi = \frac{2.\pi.Ri}{dt} \quad (8)$$

On notera que, à la place des capteurs ABS, on pourrait utiliser des capteurs spécifiques 11, directement reliés au circuit de lissage 15.

De même, une variante de la détermination de la localisation des capteurs de pression est possible, par comparaison des vitesses Vi avec des vitesses obtenues sur la base évoquée ci-dessus.

On classe, par exemple dans le sens croissant, et en permanence les vitesses Vi reçues et on forme les couples (Vi, Idi).

On dispose d'autre part d'un tableau de classement des localisations Hj par ordre des rayons de braquage R, ou plus utilement des vitesses V, croissant selon les caractéristiques de la trajectoire :

- virage à gauche ρ > ρ$_{lim}$ (H3, H4, H1, H2)
- virage à gauche ρ < ρ$_{lim}$ (H3, H1, H4, H2)
- virage à droite ρ > ρ$_{lim}$ (H4, H3, H2, H1)
- virage à droite ρ < ρ$_{lim}$ (H4, H2, H3, H1)

ρ$_{lim}$ étant le rayon de braquage limite pour lequel $V_2$ et $V_3$ sont sensiblement égales et les définitions de localisation Hi des roues i étant les suivantes:

- H1 : roue avant gauche
- H2 : roue avant droite
- H3 : roue arrière gauche
- H4 : roue arrière droite

On associe alors le capteur de pression de la roue i, d'identification Idi, correspondant à la vitesse de rotation Vi, et la localisation Hj correspondante, selon l'algorithme suivant:

1°) les vitesses Vi et les localisations Hj sont de même rang dans les classements effectués,

2°) l'angle de braquage ρ pour la période de mesure de la vitesse de rotation des roues est compris entre deux seuils prédéterminés inférieur à ρ$_{lim}$ ou supérieur à un troisième seuil prédéterminé supérieur à ρ$_{lim}$.

Naturellement, dans cette variante, il faut disposer de la valeur de l'angle de braquage. C'est une valeur qui est fonction de la position du volant et qui peut être fournie par le système de direction assistée.

Sur les valeurs de seuil à appliquer et de quelles quantités ces valeurs sont éloignées des seuils théoriques indiqués plus haut pour éviter des localisations erronées, en d'autres termes sur les marges de sécurité à appliquer, on peut procéder de la façon suivante :

- relever les valeurs des seuils théoriques en usine de fabrication du véhicule pour des pneumatiques issus de différents constructeurs, ces pneumatiques étant à une pression nominale,
- relever les variations de ces seuils en fonction de variations de pression maximales admissibles, c'est-à-dire qui ne déclenchent pas d'alarme au niveau du système TPMS, des pneumatiques situés en diagonale du châssis du véhicule, ces variations de pression étant effectuées de façon à diminuer la différence de vitesses de rotation des roues correspondantes,

- mémoriser les variations de ces seuils comme marges de sécurité à appliquer aux seuils théoriques dans une partie P de la mémoire 177 de l'organe de contrôle 17.

Dans une autre variante de réalisation, on compare les vitesses des roues avec la vitesse linéaire S du véhicule, délivrée en 18 par exemple par l'indicateur de vitesse ou déduite de l'odomètre pour localiser les roues en fonction du sens des virages.

Soit S la vitesse du véhicule.

Dans le cas d'un virage à gauche,

$$\text{si } S - Vi < 0,$$

il s'agit de la vitesse de la roue droite,

$$\text{si } S - Vi > 0,$$

il s'agit de la vitesse de la roue gauche.

Dans le cas d'un virage à droite,

$$\text{si } S - Vi < 0,$$

il s'agit de la vitesse de la roue gauche,

$$\text{si } S - Vi > 0,$$

il s'agit de la vitesse de la roue droite.

On notera que dans la première forme de réalisation, les vitesses Vi et les vitesses de rotation des roues Ui fournies par les capteurs ABS sont comparées, après acquisition de deux façons différentes. Il en est de même dans les variantes de réalisation où on procède à des comparaisons des vitesses Vi avec des vitesses différentes des roues dans des portions de trajectoire non rectilignes ou avec des vitesses fondées sur la vitesse du véhicule.

## Revendications

1. Système de contrôle de la pression des pneumatiques des roues (10) d'un véhicule automobile, comprenant un organe de contrôle (17) et, sur chaque roue, un capteur de pression (12) et un émetteur (13) pour transmettre à l'organe de contrôle (17) un signal de pression comprenant des données d'identification du capteur, et des moyens (17) de détermination des vitesses de rotation des roues pour associer (174-179) à chaque signal de pression la roue du capteur (12) correspondant, **caractérisé par le fait que** les moyens (17) de détermination des vitesses de rotation des roues comprennent des moyens (179) de comparaison de données de vitesses de rotation de roue, déterminées de manières différentes (34, 50), et des moyens (171, 172, 173, 177, 178) pour déterminer les périodes (Ti) des enveloppes de modulation des signaux émis par les émetteurs (13) couplés aux capteurs de pression (12) et en déduire de cette manière les vitesses (Vi) de rotation des roues.

2. Système selon la revendications 1, dans lequel lesdits moyens de détermination utilisent des capteurs fixes (20) de vitesse de rotation de roue de localisations connues.

3. Système selon la revendication 2, dans lequel les capteurs fixes de vitesse de rotation de roue sont ceux d'un dispositif antiblocage de roues (20).

4. Système selon l'une des revendications 1 à 3, dans lequel lesdits moyens (179) de comparaison sont agencés (19, 15, 35, 50) pour ne procéder aux comparaisons que pendant les phases de trajectoires non rectilignes du véhicule.

5. Système selon la revendication 1, dans lequel sont prévus des moyens (179) agencés pour déterminer les vitesses des roues à partir de la vitesse du véhicule (18) et des caractéristiques dynamiques de la trajectoire du véhicule (19).

6. Système selon la revendication 4, dans lequel sont prévus des moyens (179) agencés pour comparer les vitesses (Vi) des roues avec la vitesse linéaire (S) du véhicule pour localiser les roues en fonction du sens des virages.

## Claims

1. System for checking the wheel tire pressure (10) for an automotive vehicle, comprising a checking mechanism (17) and, on each wheel, a pressure sensor (12) and a transmitter (13) for transmitting to the checking mechanism (17) a pressure signal comprising sensor identification data, and means (17) for determining the wheel rotation speeds so as to associate (174-179) to each pressure signal the corresponding sensor (12) wheel, **characterized by** the fact that the wheel rotation speed determining means (17) comprise comparing means (179) for comparing wheel rotation speed data, determined in different ways (34, 50), and means (171, 172, 173, 177, 178) for determining the periods (Ti) of the modulation envelops for the signals transmitted by the transmitters (13) coupled to the pressure sensors (12) and so deducing the wheel rotation speeds (Vi).

2. System according to claim 1, wherein said determining means use fixed wheel rotation speed sensors (20) having known localizations.

3. System according to claim 2, wherein the fixed wheel rotation speed sensors are those of a wheel anti-blocking device (20).

4. System according to anyone of claims 1 to 3, wherein said comparing means (179) are arranged (19, 15, 35, 50) to start comparisons only during the vehicle non-linear trajectory phases.

5. System according to claim 1, wherein means (179) are provided being arranged for determining the wheel speeds from the vehicle (18) speed and dynamic characteristics of the vehicle (19) trajectory.

6. System according to claim 4, wherein means (179) are provided being arranged for comparing the wheel speeds (Vi) with the vehicle linear speed (S) in order to localize the wheels with respect to the turning direction.

**Patentansprüche**

1. System zur Kontrolle des Reifendruckes der Räder (10) eines Kraftfahrzeugs, welches ein Kontrollorgan (17) und an jedem Rad einen Druckgeber (12) und einen Sender (13), um ein Identifikationsdaten des Gebers umfassendes Drucksignal zu Kontrollorgan (17) zu übertragen, und Mittel (17) zur Bestimmung der Drehzahlen der Räder, um mit jedem Drucksignal das Rad des entsprechenden Gebers (12) zu verknüpfen (174-179), umfasst, **dadurch gekennzeichnet, dass** die Mittel (17) zur Bestimmung der Drehzahlen der Räder Mittel (179) zum Vergleich von Daten von Raddrehzahlen, die auf unterschiedliche Weisen (34,50) bestimmt wurden, und Mittel (171, 172, 173, 177, 178), um die Perioden (Ti) der Modulationshüllkurven der Signale, die von den mit den Druckgebern (12) gekoppelten Sendern (13) gesendet werden, zu bestimmen und daraus auf diese Weise die Drehzahlen (Vi) der Räder abzuleiten, umfassen.

2. System nach Anspruch 1, wobei die Mittel zur Bestimmung feste Geber (20) der Raddrehzahl mit bekannten Positionen verwenden.

3. System nach Anspruch 2, wobei die festen Geber der Raddrehzahl diejenigen einer Antiblockiervorrichtung der Räder (20) sind.

4. System nach einem der Ansprüche 1 bis 3, wobei die Mittel (179) zum Vergleich so ausgebildet sind (19, 15, 35, 50), dass sie Vergleiche nur während der Phasen von nicht geradlinigen Trajektorien des Fahrzeugs durchführen.

5. System nach Anspruch 1, wobei Mittel (179) vorgesehen sind, die so ausgebildet sind, dass sie die Drehzahlen der Räder ausgehend von der Geschwindigkeit des Fahrzeugs (18) und von den dynamischen Kenngrößen der Trajektorie des Fahrzeugs (19) bestimmen.

6. System nach Anspruch 4, wobei Mittel (179) vorgesehen sind, die so ausgebildet sind, dass sie die Drehzahlen (Vi) der Räder mit der Lineargeschwindigkeit (S) des Fahrzeugs vergleichen, um die Räder in Abhängigkeit von der Richtung der Kurven zu lokalisieren.

FIG.1

Cycle N-1    Cycle N    (22)    Cycle N+1

FIG.2

SIGNAL 23

178

172

173

39

30

24

31 $i_1 \; ; \; i_2$

32 $i_2 - i_1$

33 $(i_2 - i_1)/f_e = T_i$

34 $V_i = c/T_i$
$v_i = 1/T_i$

35 $U, U_i, \rho$

50 $H_i \quad L_i$

36 $\textcircled{H}$

37 $\circlearrowright$ 38

176

179

177

$P_1$ $M_1$
$P_i$ $M_i$
$P_n$ $M_n$
$P$

20 19
15 18

175

TPMS

## FIG.3

12 10a

10 10b

175 14

TPMS 17

15

20 19

18 A B S DIRECTION ASSISTEE

INDICATEUR DE VITESSE

10d 10c

## FIG. 4

10a E 10b

L R1 R2

R4 O

10c E 10d

R3

R1>R3>R2>R4

## FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 806307 A
- EP 0997326 A